# EUROPEAN PATENT APPLICATION

(11) **EP 1 407 663 A1**
(43) Date of publication of application: **14.04.2004**
(21) Application number: 03256402.3
(22) Date of filing: 10.10.2003
(51) Int. Cl.: A01K 97/06

(54) **A fishing leader storage assembly**

(30) Priority: 11.10.2002 US 268974
(71) Applicant: ZAG Industries, Ltd., 48091 Rosh Ha'Ayin (IL)
(72) Inventor: Levy, Ronny, Tel Aviv 65131 (IL)
(74) Representative: Freeman, Avi

(57) **Abstract**

A hanger for storing fishing leaders includes a flexible member movable from an equilibrium configuration to flexed condition. A plurality of support members are secured along the member to support one or more looped sections of fishing line and to engage the hook of a stored leader. A fishing leader may be stored by securing the first end of the leader to the flexible member, looping the fishing line around one or more support members and securing the fishing hook over one of the support members while the flexible member is manually held in a flexed condition. Movement of the flexible member back toward its equilibrium configuration when the flexible member is released tensions the fishing line so that the stored fishing leader is taut. The leader hanger can be releasably retained in a storage box that can be selectively configured by a user.

## Description

The present invention relates to a storage assembly, a fishing leader storage assembly, a fishing leader hanger and a method of storing one or more fishing leaders.

In particular embodiments, the present invention relates to fishing equipment. More specifically, the present invention relates to devices for fishing equipment storage.

Anglers often use fishing leaders while fishing. Fishing leaders are assemblies comprising a short length of fishing line and a hook that is secured to one end of the fishing line. The opposite end of the leader line is typically tied in the form of a loop. A leader is attached to the end of the fishing line supported by a fishing rod by attaching the loop of the fishing leader to the end of the fishing line on the fishing rod. Leaders allow the angler to switch or replace hooks easily without having to tie a new hook onto the line each time a different size hook is desired or a hook is lost.

Storing and handling fishing leaders is complicated by several factors. Anglers typically use many fishing leaders while fishing and change leaders frequently. Anglers therefore often want to be able to choose from among many leaders while fishing and to access each fishing leader quickly and easily. When storing and using large numbers of fishing leaders, the fishing leader lines often become tangled with one another. Further, the fishing hook on the fishing leader can be damaged if the fishing leader is not handled properly. For example, the sharpness of a fishing hook may be reduced or the hook can become misshapen if the hook comes into contact with other objects while being handled. Fishing leaders should therefore be stored so that the hooks are protected from damage.

Anglers use fishing leaders having various line lengths, hook sizes, and hook shapes. Fishing leaders should be stored so that particular fishing leaders can be easily identified, located and removed from storage. Fishing leaders should also be easy to clean after use.

According to a first aspect of the present invention, there is provided a fishing leader storage assembly comprising a container having an interior storage space and at least a pair of opposed upstanding walls with slots formed therein, and at least one leader hanger for storing one or more fishing leaders. Each leader hanger is formed as an elongate member having a plurality of leader support members thereon. The elongate member has a length and opposed longitudinal wall portions, and the support members extend from at least one longitudinal wall portion at spaced longitudinal locations so that a leader may be retained in a longitudinal storage position. At least one leader hanger is removably supported in the slots in the container.

The leader hanger may be formed of flexible molded plastic material to allow the hanger to move between a flexed condition and an equilibrium condition to change the distance between support members and allow a fishing leader to be retained on the hanger and then stored in a taut condition.

The container can include a pivoting tray or removable partition walls that define the slots that retain the leader hanger. Preferably, a plurality of leader hangers are stored in a spaced parallel relation in the container.

According to a second aspect of the present invention, there is provided a storage assembly comprising a container with an interior storage space and side walls having a leader holding structure and at least one leader hanger for storing a fishing leader. The leader is formed as an elongate member having at least two flexible support members thereon for securing a fishing leader thereto. At least one leader hanger is removably supported in the container by the leader holding structure.

According to a third aspect of the present invention, there is provided a method of storing one or more fishing leaders, each fishing leader having a hook at a first end of a length of fishing line and a loop at the second end thereof, the method comprising: providing a fishing leader hanger having an elongate flexible member and one or more support members extending outwardly from the flexible member; releasably securing the loop of the or each fishing leader around a fist part of the fishing leader hanger; looping the fishing line of the or each fishing leader around the one or more support members; and, engaging the hook from the or each fishing leader with one of the one or more support members.

According to a fourth aspect of the present invention, there is provided a fishing leader hanger, comprising an elongate flexible member and one or more support members extending outwardly from the flexible member. At least one of the one or more support members is adapted for engagement with a hook of a fishing leader when stored on the fishing leader hanger.

Embodiments of the present invention will now be described by way of example with reference to the accompanying drawings, in which:
FIG. 1 shows an illustrative embodiment of a fishing leader hanger;
FIG. 2 shows the fishing leader hanger of FIG. 1 with a loop portion of the fishing leader secured to a portion of the fishing leader hanger;
FIG. 3 is an enlarged view of a portion the leader hanger as indicated in FIG. 2;
FIG. 4 shows the fishing leader hanger of FIG. 1 with a line portion of the fishing leader looped around a support member of the leader hanger;
FIG. 5 shows the fishing leader of FIG. 1 with a hook of the fishing leader hookingly engaged with another support member of the leader hanger;
FIG. 6 shows a pair of fishing leaders stored on the fishing leader hanger of FIG. 1;
FIG. 7 shows another pair of fishing leaders stored on the fishing leader hanger of FIG. 1;
FIG. 8 shows an illustrative embodiment of a storage tray for storing and organizing a plurality of fishing leader hangers;
FIG. 9 shows an illustrative embodiment of a storage assembly for storing a plurality of fishing leader hangers;
FIG. 10 shows the storage assembly of FIG. 9 with a storage tray thereof in a leader access position;
FIG. 11 is an enlarged partial front view of a leader hanger;
FIG. 12 is a side perspective view of a storage container and the leader hanger of FIG. 7 stored therein;
FIG. 13 is a partial enlarged side view of the leader hanger of FIG. 11 retained in the storage container of FIG. 12;
FIG. 14 is a top view of a removable partition for use with the storage container of FIG. 12;
FIG. 15 is a top view of another removable partition for use with the storage container of FIG. 12; and,
FIG. 16 is a side view of removable partitions for use with the storage container of FIG. 12 in a preassembled condition.

Other aspects, features, and advantages of the present invention will become apparent from the following detailed description of the illustrated embodiments, the accompanying drawings, and the appended claims.

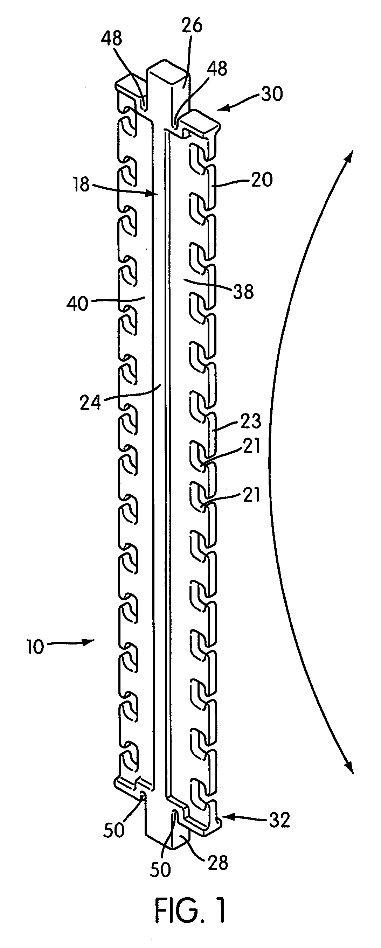

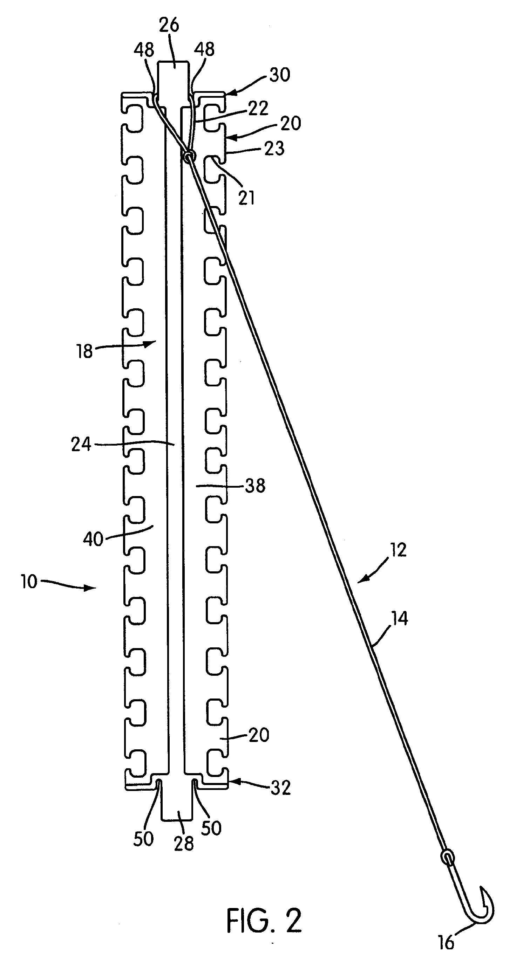

FIG. 1 shows an illustrative embodiment of a leader hanger 10. Each leader hanger 10 may be used to store one or more fishing leaders, generally designated 12, as seen in FIG. 2, for example. Each fishing leader 12 is comprised of a length of fishing line 14 having a first end with a fishing hook 16 secured to the end. As is conventionally known, a loop may be provided at the first end portion of the fishing line 14 to attach the hook 16 or a separate piece of hardware (e.g., an eyelet, a snap-type closure) may be attached to the line 14 to provide an attachment mechanism for the hook 16. The second, opposite end of the fishing line 14 of the fishing leader 12 is formed in a closed loop 22, by tying for example. The loop 22 provides an attachment mechanism to connect the fishing leader 12 to the end of fishing line supported by a fishing rod, as is known.

The precise design, size or style of the fishing leader 12 is not critical and it is contemplated that the leader hanger 10 can accommodate all types of leaders 12. Each leader hanger 10 can store one or more fishing leaders 12. The fishing leaders 12 that are stored on a particular leader hanger 10 may be of various lengths and/or may have hooks 16 of various configurations (e.g., single hooks, double, hooks, triple hooks, etc.), sizes and shapes.

Each leader hanger 10 is formed as an elongate flexible member 18 with a central rib 24 on each side and wall portions 38, 40 extending from the ribs 24. A plurality of support members 20 are secured to the wall portions 38, 40 along the length of the flexible member 18 or, if desired, just along a section of the flexible member 18. In a preferred embodiment, support members 20 extend from each side of the elongate member 18 and are evenly spaced in a parallel relationship. However, any configuration, including asymmetric or one sided arrangements are possible.

The plurality of support members 20 extend outwardly from the flexible member 18 and are spaced from one another along the length of a section of (or, alternatively, the entire length of) the flexible member 18. Each support member 20 is configured to support one or more looped sections of the fishing line 14 of a stored fishing leader 12 and each support member 20 is configured to hookingly engage the fishing hook 16 of a stored fishing leader. Each support member 20 is shaped with arcuate edges 21 and a flared face 23.

The ends of the leader hanger 10 have outwardly extending end portions 26, 28 that are co-extensive with the central ribs 24. On each side of each end portion 26, 28 slots 48, 50 , respectively, are formed. If desired, the support members 20 adjacent to the ends can be formed as end arms 30, 32 that have a flat outer edge extending from the slots 48, 50, respectively. The end portions 26, 28 can have any configuration. However, in the preferred embodiment, the end portions 26, 28 are polygonal or have flat outer edges.

The construction of the fishing leader hanger 10 can be appreciated from FIG. 1. Preferably, the fishing leader hanger 10 is an integral, one-piece structure constructed of a suitable molded plastic material. The leader hanger 10 may be a solid molded plastic structure, may be a hollow molded plastic structure, or may have both solid and hollow portions. When the leader hanger 10 is in the form of a one-piece integral molded plastic structure, the leader hanger 10 may be shaped so that a portion of the molded plastic structure defines or forms an elongate flexible member 18 and other portions of the molded plastic structure form a plurality of integral support members 20 extending outwardly along a section of the flexible member 18. In a preferred embodiment, the elongate flexible member 18 may be constructed of a resilient, flexible material such as a suitable molded plastic that is capable of being flexed or moved out of an equilibrium configuration and held in a flexed condition and moved back toward and into its equilibrium configuration when released from being held in a flexed condition.

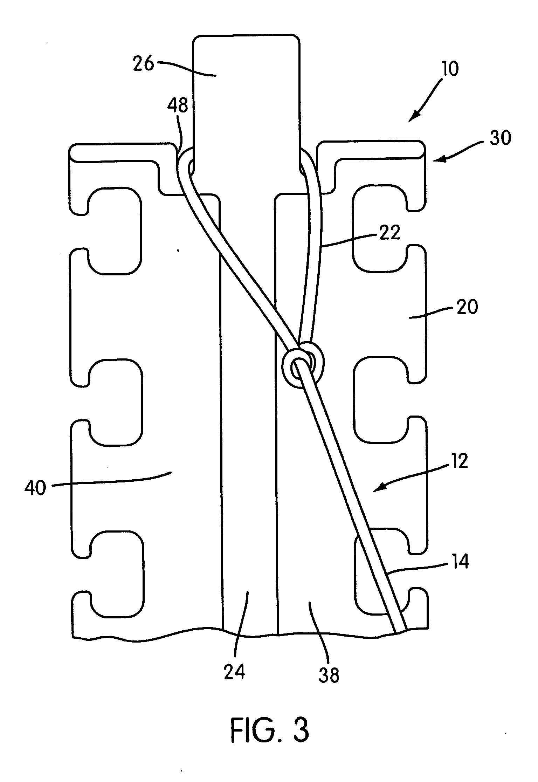

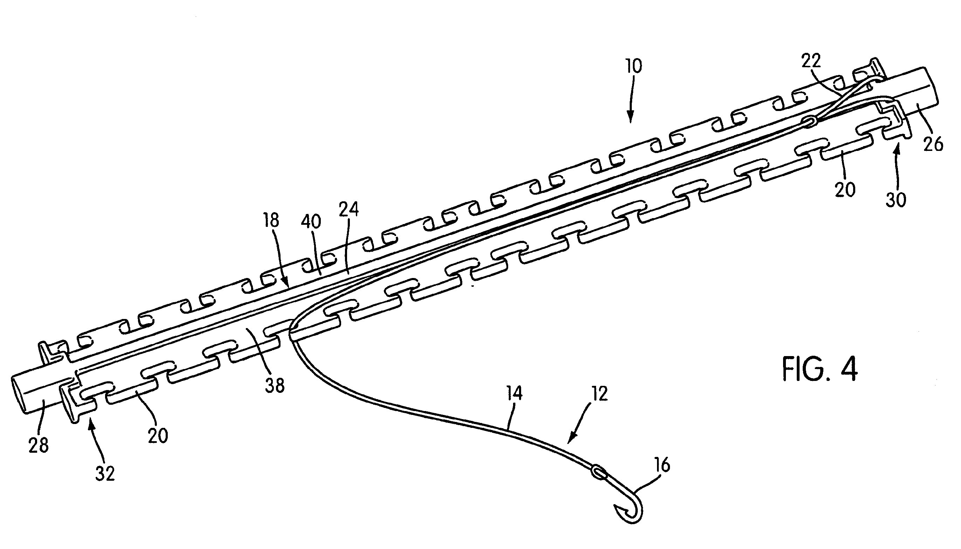

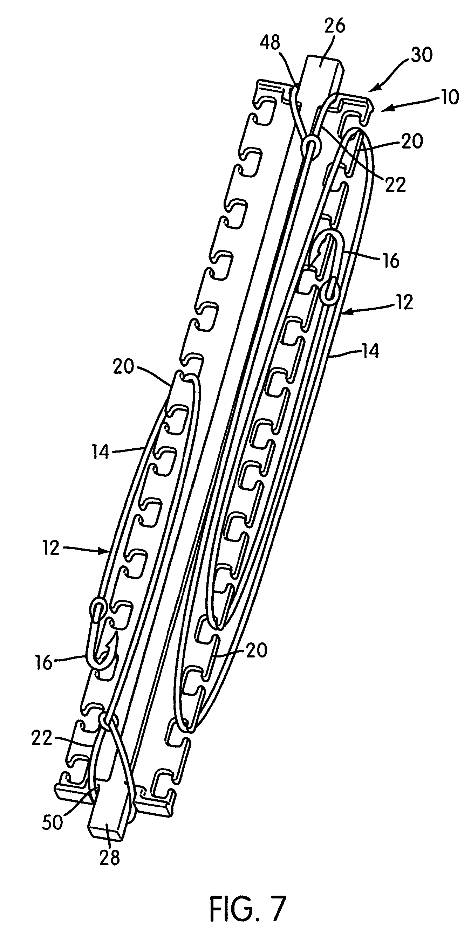

An example of how a leader hanger 10 can be utilized to store a particular fishing leader 12 can be understood from FIGS. 2-7. The flexible member 18 and the plurality of support members 20 are designed so that a fishing leader 12 may be stored by releaseably securing the end loop 22 around the flexible member 18 at end portion 26 in slots 48. The line 14 is then looped around the hanger 10 by looping it around a support member 20, as seen in FIG. 4. The hook 16 is then hooked onto a support member 20 against the arcuate edge 21. The flared face 23 prevents the hook 16 from sliding off the hanger 10. If the leader 12 has a long line 14, the line 14 is looped again around another support member 20 before securing the hook 16, as seen in FIG. 7.

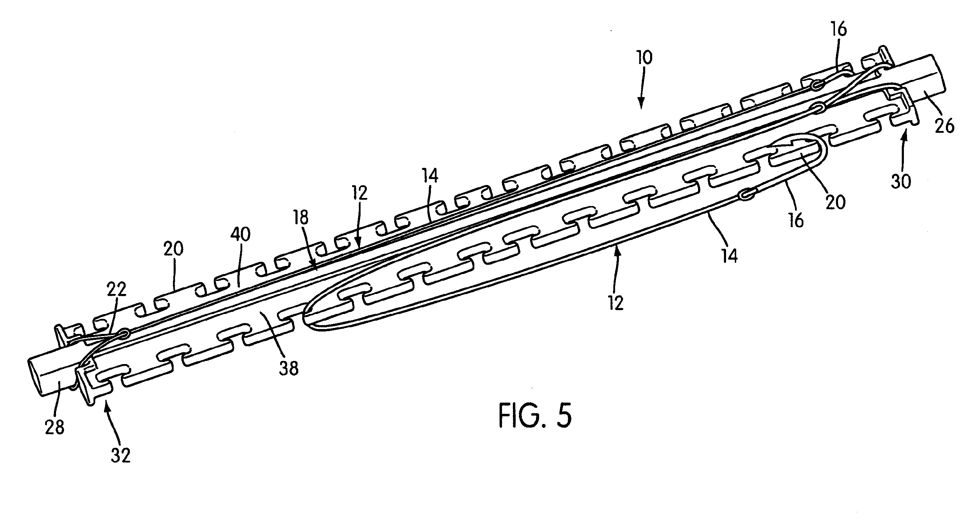

Preferably, the fishing line 14 is looped around a sufficient number of support members 20 that the hook 16 terminates in the vicinity of a support member 20. If the line 14 is not long enough to loop around a support member 20, it is also possible to merely attach the hook 16 directly to the arcuate edge 21 of a support member, as seen in FIG. 5. Also seen in FIG. 5, it is intended that multiple leaders 12 can be secured to a single hanger 10.

It is also possible to secure the end loop 22 to a support member 20 or arm 30, 32, rather than on an end portion 26, 28, or to secure the hook 16 to an end portion 26, 28 or arm 30, 32, rather than a support member 20. As will be appreciated, the design of the hanger 10 provides a great deal of freedom and flexibility in choosing how to precisely secure the leader 12 and therefore can accommodate various leader styles and sizes.

To provide a taut storage condition, the hook 16 of the fishing leader 12 can be hooked over one of the support members 20 while the member 18 is held in a flexed condition so that when the flexible member 18 is released, the line 14 is stretched in a taut condition. Preferably, the support member 20 to which the hook is attached is selected such that when the flexible member 18 is released, movement of the flexible member 18 back toward its equilibrium configuration tensions the fishing line 14 of the fishing leader 12. The tension in the fishing line 14 also holds the fishing hook 16 in hooked engagement against the support member 20 selected to receive the hook 16 so that the fishing leader 12 is securely engaged with the leader hanger 10.

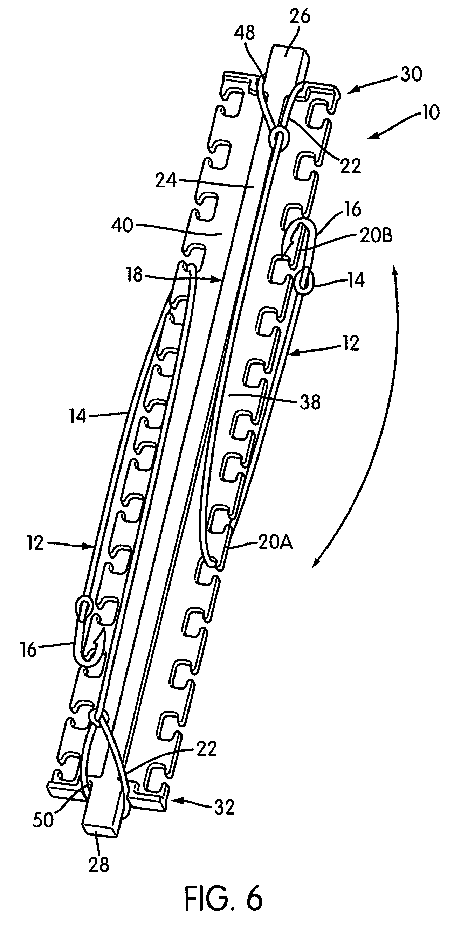

In the illustrated examples, the flexible member 18 may be flexed in a direction generally indicated by the curved, double headed arrow shown in FIG. 1. As can be appreciated by FIG. 6, this flexing represented by the curved arrow would cause a first support member 20A to move towards another support member 20B (i.e., the straight line distance between support members 20A and 20B will be reduced as the flexible member 18 is flexed) sufficiently for the hook 16 to be hooked over support member 20B. When the flexible member 18 is released, the support members 20A and 20B will move away from one another which will tension the fishing line 14 of the fishing leader 12. The fishing leader 12 can be released from engagement with the fishing leader hanger 10 by manually flexing the flexible member 18 a sufficient amount that the hook 16 can be removed from the support member 20B with which it is hookingly engaged and then removing the hook 16 from the support member 20B.

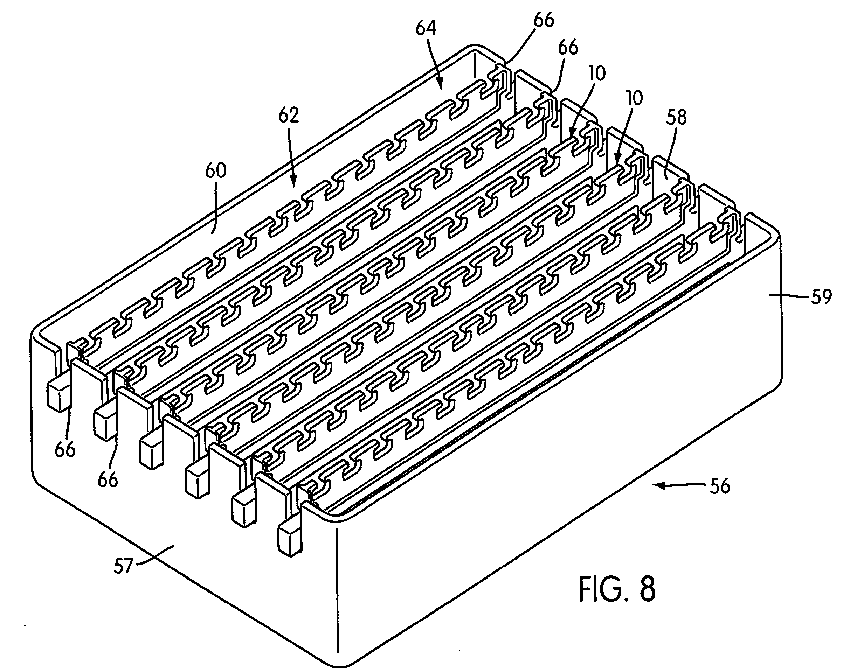

FIG. 8 illustrates that a plurality of leader hangers 10 may be stored, organized and transported in a storage tray or storage container, such as storage tray 56. The storage tray 56 may be constructed of a suitable molded plastic or other appropriate material. The tray 56 generally includes side wall structures 57, 58, 59, 60 that extend upwardly from respective edges of a bottom wall. If desired, the bottom wall may be omitted. The tray 56 has a top opening 62 and an interior storage space 64. The storage tray 56 may include a plurality of slot structures 66 for releasably holding a plurality of leader hangers 10. The slot structures 66 are formed in opposing side wall structures 57, 58 of the storage tray 56 and are arranged to hold the fishing leader hangers 10 in the storage space 64 in closely spaced relation to one another and in parallel relation to one another.

The slot structures 66 may be constructed so that each leader hanger 10 can be pressed fit into a pair of slot structures 66 to releasably hold each leader hanger 10 in the storage space 64 of the storage tray 56. Specifically, the slot structures 66 may be constructed so that the end portions 26, 28 of each flexible member 18 can be inserted into the slot structures 66 and retained in the slot structures 66 by, for example, an interference fit. The shape of the slot structures 66 can be designed to complement the shape of the end portions 26, 28 so that when the leader 10 is stored, the leader 10 will not rotate. Each leader hanger 10 can be pulled out of the slot structures 66 to remove each fishing leader hanger 10 from the storage tray 56.

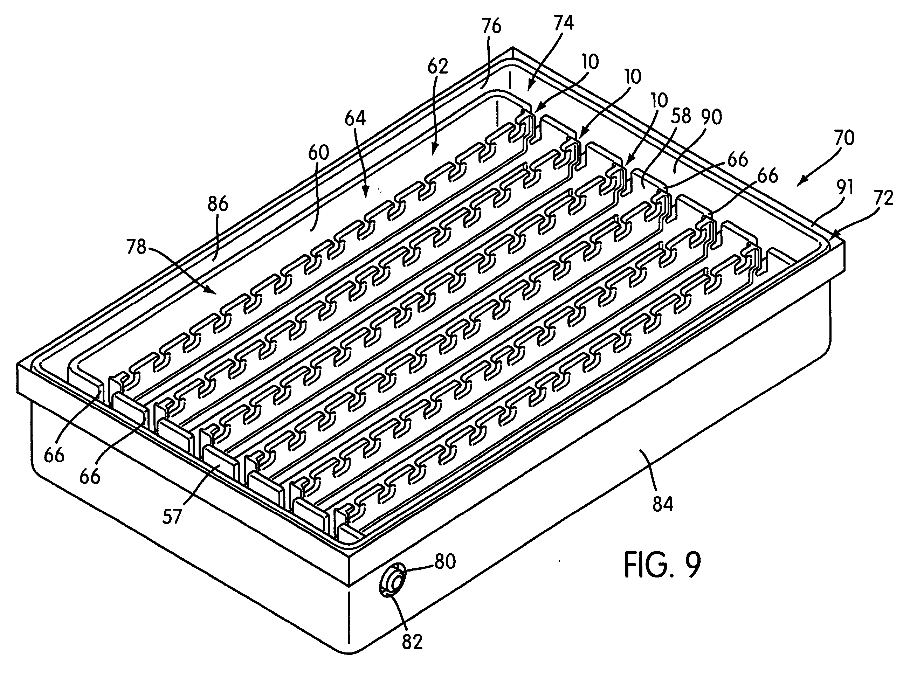

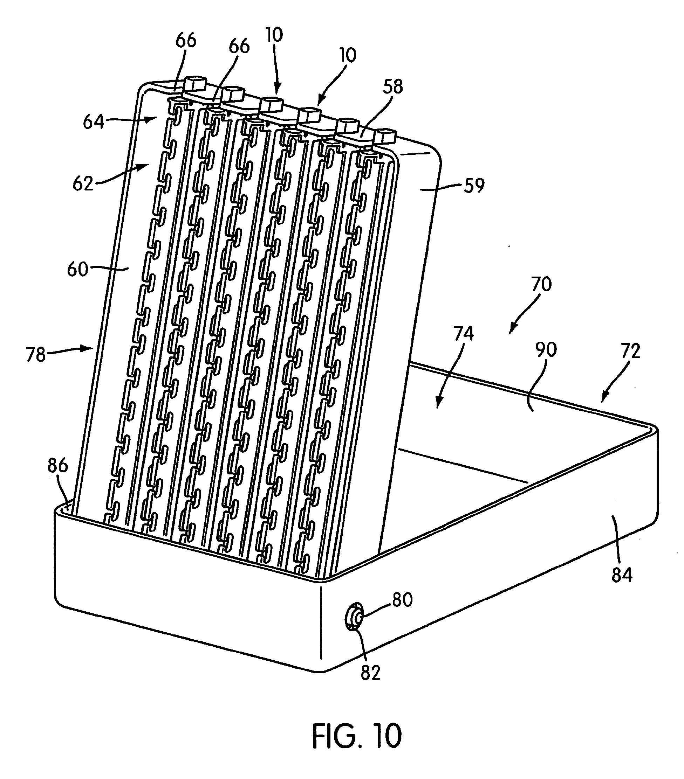

FIG. 9 illustrates that a plurality of leader hangers 10 may be stored, organized and transported in a storage assembly 70. The storage assembly 70 includes a portable storage container 72 that can be hand carried between locations. The storage container 72 has an interior storage space 74 and an opening 76 that opens into the interior storage space 74. A storage tray 78, which may be similar to storage tray 56, is mounted in the storage container 72 for pivotal movement between a tray storage position (see FIG. 9) in which the tray 78 is contained within the interior storage space of the container 72 and a deployed position or leader access position (see FIG. 10) in which a portion of the storage tray 78 extends angularly upwardly from the container 72 and outwardly of the storage space of the container 72. A plurality of leader hangers 10 are mounted in the storage tray 78 of the storage assembly 70.

Because the storage tray 78 is similar to the storage tray 56, portions of the tray 78 that are identical to portions of the tray 56 are identified by the identical reference numbers and are not discussed further. The storage tray 78 is mounted in the storage container 72 for pivotal moment between its storage and deployed positions by a pair of pivot structures 80. A pivot structure 80 is rigidly secured to each side 59, 60 of the tray 78. The pivot structures 80 are co-linear and define a pivot axis for the tray 78. Each pivot structure is pivotally mounted in an opening 82 in a sidewall 84, 86, respectively of the storage container 72.

The storage assembly 70 may be releasably held in its deployed positioned by any suitable releasable structure. For example, in the instance in which the tray 78 and the container 72 are each constructed of a molded plastic, a recess-projection connection between the tray 78 and container 72 may releaseably hold the tray 78 in its deployed position. Alternatively, an arm may be pivotally mounted to the back of (i.e., the bottom wall of) the tray portion 78, for example, such that when the tray 78 is in its deployed position, the arm may be pivoted outwardly from an upper portion of the back of the tray 78 so that when the tray 78 is moved slightly rearwardly, the free end of the arm comes into contact with a back wall structure 90 of the container 72 to support the tray 78 in its deployed positioned.

It is also contemplated to provide a cover 91 for the storage assembly 70. The cover 91 may be constructed of a molded plastic and may be made of a transparent plastic material so that when the cover 91 is placed on the container 72, fishing leaders are visible through the cover. The cover 91 may be press or snap fit onto the tray or be held on the tray by any other suitable method or mechanism.

It can be appreciated that the tray 56 or 78 neatly organizes the fishing leader hangers 10 and that the fishing leaders 12 stored in the leader hangers 10 are all visible when the person fishing looks into the tray. Because the leader hangers 10 can each be easily removed individually from the tray 56 or 78, any of the fishing leaders can be accessed easily. The illustrative fishing leader hanger 10 is a somewhat planar structure. That is, the fishing leader hanger 10 is relatively thin in side view and relatively wide in front view and has a generally somewhat flat structure. The fishing leader hangers 10 are stored in the illustrative tray 56 or 78 so that they are seen in side view when looking directly into the opening 62 of the tray. This arrangement of the fishing leader hangers 10 in the tray 56 or 78 makes the stored fishing leaders 12 easy to see and makes efficient use of the storage space of the tray 56, 78.

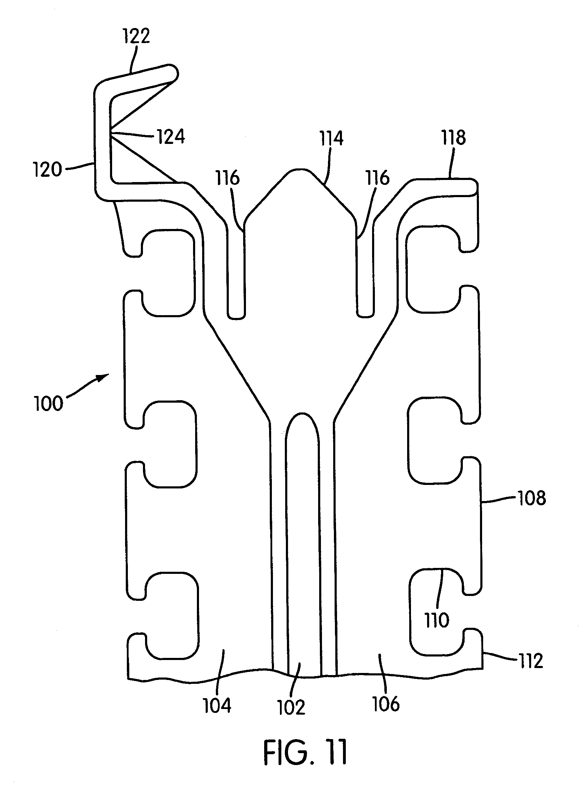

A leader hanger 100 in accordance with another embodiment is shown in FIG. 11. The elements of hanger 100 that are the same as hanger 10 are not described in detail. Hanger 100 is preferably made of flexible plastic with a central rib 102 and side wall portions 104, 106 extending from each side. Support members 108 extend from each side wall portions 104, 106 and include an arcuate edge 110 and flared face 112. An end portion 114 extends outward from each end. Each end portion 114 is defined by a pair of slots 116 on each side thereof. On one side of end portion 114 and slot 116, an end arm 118 terminates at a support member 108. The other side of end portion 114 and slot 116 has an extension arm 120 that forms a finger 122 with a groove 124.

To retain a fishing leader on the hanger 100, as in hanger 10, the hanger 100 is flexed and the leader is looped around the end portion 114, for example, and then looped around and hooked to a support member 108.

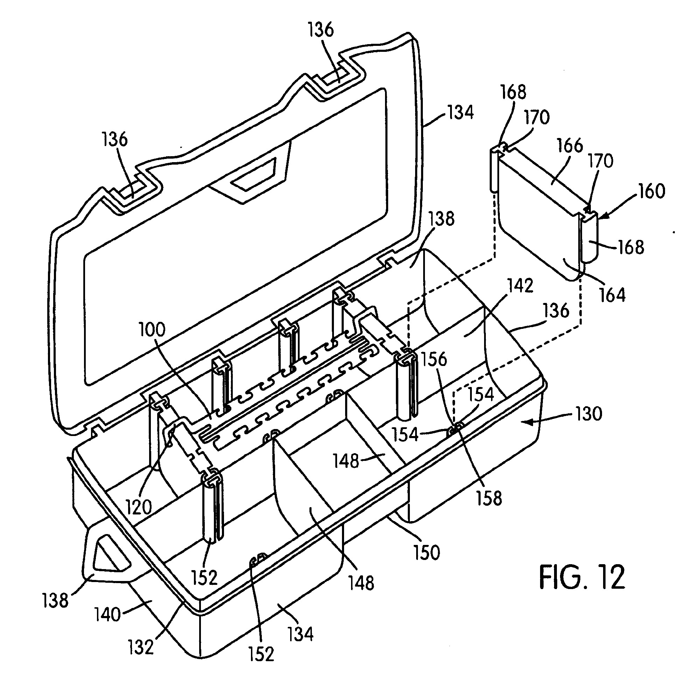

Referring to FIG. 12, the hanger 100 may be stored in a container 130. Container 130 is preferably made of plastic, especially molded plastic, which may be translucent or transparent, if desired. Container 130 may be sized to be easily hand carried or retained in a larger container if desired. Container 130 includes a base 132 and a cover 134 hinged to the base 132. Cover 134 has a pair of releasable latching mechanisms 136 that can be press fit or snap fit. A hook or hanger 138 extends from the base 130 so that the container 130 can be hung for display, storage or transport. Of course, any type of handle can be provided on the container 130.

The base 132 is formed by upstanding side walls 134, 136, 138, and 140. At least one fixed partition 142 is formed in the base 132 to define discrete compartments 144 and 146. Any number of fixed partitions 142 may be provided. In the embodiment shown in FIG. 12, one transverse partition 142 and two cross partitions 148 are provided that define a shallow compartment that creates a recess 150 in the bottom of base 132 that can function as a hand or finger hold when grasping or opening the container 130.

A series of retaining channels 152 are formed in the side walls 134, 138 and partition 142. As will be appreciated, the retaining channels 152 can be formed on any upstanding walls in the base 132. The channels 152 are positioned to face each other as will be explained below. Each channel 152 is formed by a pair of curved flanges 154 that face each other and define a slot 156 that leads to an open channel 158.

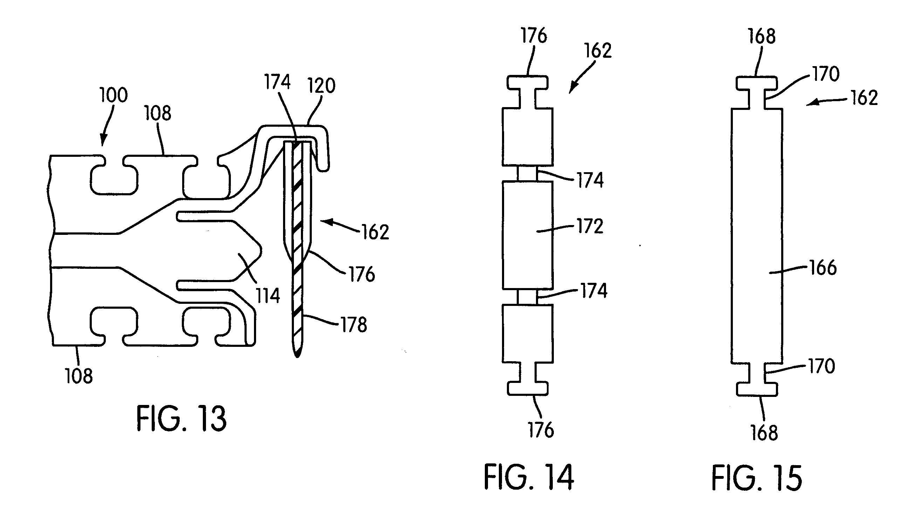

The container 130 is supplied with a plurality of removable partitions 160, 162, seen in FIGS. 14 and 15, respectively. Partition 160 has a central wall 164 with a widened top 166 and side tabs 168. The side tabs 168 are preferably formed in a T-shape. At each end of the top 166, a groove 170 is defined that interacts with the flanges 154. The T-shaped tabs 168 can then be slid into the channel 158. Partition 162 is similar to partition 160 except that top 172 has a plurality of grooves 174. Side tabs 176 and central wall 178 are the same configuration as in partition 160.

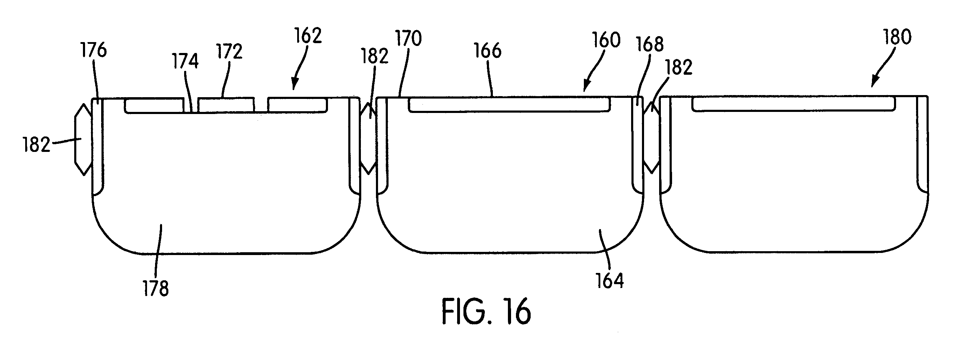

The partitions 160 and/or 162 can be provided as a strip 180 connected by frangible portions 182, as seen in FIG. 16. Then, a user can break off each partition 160, 162 as desired. The selected partition 160/162 can then be slid downward between facing channels 152. By this, the size and number of compartments can be selected by the user.

FIG. 13 shows how hanger 100 can be engaged with a partition 162. When it is desired to store hanger 100 in container 130, partitions 162 are positioned in base 132 at a distance equal to the length of the hanger 100. Then, hanger 100 is hung on partition 162 by engaging extension arm 120 with the top 172 and positioning finger 122 so that groove 124 fits into groove 174 and arm 120 lies flush with top 172. A series of hangers 100 can be retained in this manner in a spaced parallel relationship.

It can be appreciated that the embodiments of the fishing leader hangers 10, 100 shown and described are illustrative only and not intended to limit the scope of the invention. Other configurations of a fishing leader hanger are thus contemplated. The illustrative embodiment of a fishing leader hangers 10, 100 included two rows of support members 20, 108 on opposite sides of the fishing leader hanger 10, 100, respectively. This is illustrative only and other arrangements of support members are possible.

Each structure, including the leaders and containers, shown herein may optionally be formed as an integral, molded plastic element. Other materials could be used if desired, including metal. It is also possible to construct the hangers to be relatively inflexible and the support members could be constructed to provide all of the flexibility needed to store a plurality of fishing leaders in a taut condition. The elongate member could be constructed of a metallic material or a plastic material that is constructed to be relatively inflexible and the support members could be constructed of a flexible material. This type of construction could also be achieved by molding plastic around a relatively stiff core (e.g., a metallic material) to form rows of flexible support members along the sides of the core.

Because the fishing leader hanger 10, 100 holds the fishing line 14 of each fishing leader 12 taut, and because the fishing leaders are easily removed from a leader hanger, the line will not become tangled while, for example, in storage or while being removed from or placed in storage. Each fishing leader 12 can be easily cleaned and rinsed in its stored position on a fishing leader hanger 10, 100. For example, because the fishing line 14 is taut and the hook 16 is accessible, old portions of bait and other debris can be removed from each fishing leader 12 and the fishing leader 12 may be rinsed while the fishing leader is held in a stored position in a leader hanger. The fishing line 14 of each fishing leader 12 is also easy to clean because most of the length of each fishing line 14 is suspended, that is, it is not wrapped tightly against an object.

The leader hanger 10, 100 also protects the hook 16 of each fishing leader 12 because when a fishing leader 12 is in a storage position on a fishing leader hanger 10, 100 nothing touches the sharpened end of the hook of each fishing leader 12 and the sharp end of the hook curves toward the molded plastic material of a support member 20, 108 (in those instances in which the structure is constructed of a molded plastic material). The sharp portions of each hook 16 (the barb on the hook 16, for example) are therefore positioned against or very close to the relatively wide side of a support member 20, 108 in the storage position. Each fishing leader hanger 10, 100 can be handled by grasping the ends to assure that the hands of the person handling the fishing leader hanger 10, 100 will not come into contact with the hook of any fishing leader 12. The support members 20, 108 are also constructed to accommodate any size hook, and the fishing leader hangers 10, 100 can accommodate any length fishing leader 12.

Thus, while the invention has been disclosed and described with reference with a limited number of embodiments, it will be apparent that variations and modifications may be made thereto without departure from the scope of the invention and various other modifications may occur to those skilled in the art. Therefore, the following claims are intended to cover modifications, variations, and equivalents thereof.

## Claims

1. A fishing leader storage assembly comprising:
a container (56) having an interior storage space and at least a pair of opposed upstanding walls with slots (66) formed therein; and
at least one leader hanger (10) for storing one or more fishing leaders, wherein each leader hanger is formed as an elongate member (18) having a plurality of leader support members (20) thereon, wherein the elongate member (18) has a length and opposed longitudinal wall portions (38, 40) and the support members (20) extend from at least one longitudinal wall portion at spaced longitudinal locations so that a leader (12) may be retained in a longitudinal storage position,
wherein the at least one leader hanger (10) is removably supported in the slots (66) in the container.

2. A storage assembly according to claim 1, wherein the at least one leader hanger (10) comprises a plurality of leader hangers.

3. A storage assembly according to claims 1 or 2, wherein each support member has a pair of arcuate edges (21) formed therein.

4. A storage assembly according to any of claims 1 to 3, wherein the elongate member (18) is flexible such that the distance between support members (20) can be varied by flexing the elongate member.

5. A storage assembly according to any of claims 1 to 4, wherein the at least one leader hanger (10) is constructed of molded plastic.

6. A storage assembly according to any of claims 1 to 5, wherein the leader hanger (10) has ends and the ends are releasably retained in the slots (66).

7. A storage assembly according to any of claims 1 to 6, wherein the container includes a storage tray that has the pair of upstanding walls.

8. A storage assembly according to any of claims 1 to 7, wherein the storage tray is pivotally connected to the container and is movable between a storage position and a leader access position.

9. A storage assembly according to any of claims 1 to 8, further comprising a cover (134) attached to the container.

10. A storage assembly according to any of claims 1 to 9, wherein the container includes removable partition walls.

11. A storage assembly according to claim 10, wherein the slots are formed in the removable partition walls (100) and the leader hanger (10) hangs between the removable partition walls.

12. A storage assembly according to claim 11 or 12, wherein a plurality of leader hangers (10) hang in spaced parallel relation between the removable partition walls (60).

13. A storage assembly according to any of claims 1 to 12, wherein the leader hanger (10) has an arm extending from each end and forming a finger (122) that hooks to the slots in the container.

14. A storage assembly according to any of claims 1 to 13, wherein the leader hanger (10) has opposed ends and longitudinally extending slots, wherein the slots are longitudinally spaced from the leader support members, such that a leader can be retained by one of the opposed ends and at least one leader support member in a longitudinal orientation.

15. A storage assembly comprising:
a container with an interior storage space and upstanding walls having a leader holding structure; and
at least one leader hanger (10) for storing a fishing leader formed as an elongate member having at least two flexible support members thereon for securing a fishing leader (12) thereto, wherein the at least one leader hanger (10) is removably supported in the container by the leader holding structure.

16. A storage assembly according to claim 15, wherein the leader holding structure is a series of spaced slots formed in opposed upstanding walls of the container, and the at least one leader hanger (10) is releasably retained in opposed slots.

17. A storage assembly according to claim 15 or 16, wherein a plurality of leader hangers (10) are supported in a spaced, parallel arrangement in the container by the leader holding structure.

18. A storage assembly according to any of claims 15 to 17, wherein the at least one leader hanger (10) has flexible support members (20) disposed along a length of an elongate side wall portion of the elongate member (18) so that ends of a leader (12) can be supported by the flexible support members (20) and the leader can be stored in a taut condition.

19. A storage assembly according to claim 18, wherein each support member (20) has an arcuate recess (21) .

20. A storage assembly according to any of claims 15 to 19, wherein the elongate member (18) is flexible and can be flexed between an equilibrium configuration and a flexed configuration to vary the distance between the flexible support members.

21. A storage assembly according to any of claims 15 to 20, further comprising a storage tray (78) pivotally retained in the container, wherein the leader hanger (10) is releasable retained in the storage tray.

22. A storage assembly according to any of claims 15 to 21, further comprising removable partitions retained in the container, wherein the removable partitions form the leader holding structure.

23. A storage assembly according to claim 22, wherein each removable partition has a top and at least one slot formed in the top, wherein each elongate member has opposed ends that are retained in the slots.

24. A method of storing one or more fishing leaders, each fishing leader (10) having a hook (16) at a first end of a length of fishing line and a loop at the second end thereof, the method comprising:
providing a fishing leader hanger (10) having an elongate flexible member (18) and one or more support members (20) extending outwardly from the flexible member (18);
releasably securing the loop of the or each fishing leader around a fist part of the fishing leader hanger;
looping the fishing line of the or each fishing leader around the one or more support members; and,
engaging the hook (16) from the or each fishing leader with one of the one or more support members.

25. A method according to claim 24, the method comprising:
arranging the fishing leader hanger in a storage assembly according to any of claims 1 to 23.

26. A fishing leader hanger, comprising:
an elongate flexible member; and,
one or more support members extending outwardly from the flexible member, wherein at least one of the one or more support members is adapted for engagement with a hook of a fishing leader when stored on the fishing leader hanger.
